# EUROPEAN PATENT APPLICATION

(11) **EP 1 935 623 A1**
(43) Date of publication of application: **25.06.2008**
(21) Application number: 07122191.5
(22) Date of filing: 03.12.2007
(51) Int. Cl.: B29C 70/48, B29K 307/04

(54) **Method of making a fiber polymer matrix composites having silicon-containing inorganic-organic matrice**

(30) Priority: 07.12.2006 US 635415
(71) Applicant: Honeywell International, Inc., Morristown, NJ 07962 (US)
(72) Inventor: Golecki, Ilan, Parsippany, NJ 07054 (US); Stevenson, James F., Morristown, NJ 07960 (US)
(74) Representative: Buckley, Guy Julian

(57) **Abstract**

Method of making a component made from solid fiber inorganic-organic-polymer matrix composite, the method includes the steps of impregnating a fiber preform with a liquid resin comprising at least one compound selected from the group consisting of silsesquioxane and polysilazane, and heating the resin-impregnated preform at a temperature below the resin pyrolysis temperature to form the solid fiber inorganic-organic-polymer matrix composite.

## Description

A part of this invention was made with Government support under FA9300-06-M-T009 awarded by the United States Air Force Research Laboratory. The Government has certain rights in some parts of this invention.

### TECHNICAL FIELD

The present invention relates to fiber matrix composites and, more particularly, to fiber matrix composites that include inorganic-organic matrices.

### BACKGROUND

Turbine engines are used as a primary power source for various kinds of aircraft. Most turbine engines generally follow the same basic power generation procedure. Air is ingested into a fan section, and passes over stator vanes that direct the air into a compressor section to be compressed. The compressed air is mixed with fuel and burned, and the expanding hot gases are directed, at a relatively high velocity, against stationary turbine vanes in the engine. The vanes turn the high velocity gas flow partially sideways to impinge on blades mounted on a rotatable turbine disk. The force of the impinging gas causes the turbine disk to spin at high speeds. Jet propulsion engines use the power created by the rotating turbine disk to draw more air into the engine and the high velocity gas is passed out of the turbine to create forward thrust.

In the past, the stator vanes and other engine components have been made of fiber organic-polymer-matrix composites, such as carbon fiber preforms impregnated with epoxy resin and carbon-bismaleimide composites, because aircraft components made of such composites are lower in weight as compared to identical or similar parts made from metals. The weights of composite parts are lower primarily because they have lower densities than metals. Composites are also desirably employed because they are relatively inexpensive and do not use a large amount of scarce natural materials.

However, as engine operating temperatures have increased with the desire for increased engine efficiency, these types of materials have been inadequate for inclusion in these newer engines. Specifically, it has been found that the thermal and oxidation resistance capabilities of these materials decrease as temperatures increase. For example, upon prolonged exposure to higher temperatures, the epoxy portion of the composite may char. Thus, it is generally advantageous to increase the upper use temperature capabilities of such parts.

Accordingly, there is a need for an improved, more thermally-resistant, more oxidation-resistant fiber polymer matrix composite that may be used to manufacture aircraft components for use in high temperature environments. Additionally, it would be desirable for the improved composite to be relatively lightweight. Moreover, it is desirable to have a process for making the composite that is inexpensive and simple to perform.

### BRIEF SUMMARY

The present invention provides components, such as mechanical or aircraft components, made from solid fiber inorganic-organic-polymer matrix composites and methods of making the components and composites.

In one embodiment, and by way of example only, a method of manufacturing a solid fiber inorganic-organic-polymer matrix composite is provided. The method includes the steps of impregnating a fiber preform with a liquid resin, the liquid resin having a pyrolysis temperature and comprising at least one compound selected from the group consisting of silsesquioxane and polysilazane, and heating the resin-impregnated fabric at a temperature below the resin pyrolysis temperature to form the solid fiber inorganic-organic-polymer matrix composite.

In another embodiment, and by way of example only, a method of manufacturing an aircraft component is provided. The method includes impregnating a fiber preform with a liquid resin comprising silsesquioxane. The method also includes forming a solid fiber inorganic-organic-polymer matrix composite from the silsesquioxane resin-impregnated fiber preform. The step of forming includes heating the silsesquioxane resin-impregnated fiber preform to a first temperature of about 60°C, increasing the first temperature to a second temperature that is substantially equal to about 80°C and subjecting the silsesquioxane resin-impregnated fiber preform to the second temperature, and then exposing the silsesquioxane resin-impregnated fiber preform to a third temperature that is between about 120°C and about 130°C. The solid fiber inorganic-organic-polymer matrix composite is formed into the component.

In another embodiment, and by way of example only, the method includes impregnating a fiber preform with a polysilazane liquid resin. The method also includes forming a solid fiber inorganic-organic-polymer matrix composite from the polysilazane resin-impregnated fiber preform. The step of forming includes heating the polysilazane resin-impregnated fiber preform to a first temperature of about 55°C, then heating the polysilazane resin-impregnated fiber perform to a second temperature of about 100°C, heating the polysilazane resin-impregnated fiber preform to a third temperature of about 150°C and, and then exposing the polysilazane resin-impregnated fiber preform to a temperature of between about 180°C and about 200°C. Additionally, the solid fiber inorganic-organic-polymer matrix composite is formed into the component.

In still yet another embodiment, and by way of example only, an aircraft component is provided that includes a solid fiber inorganic-organic-polymer matrix composite comprising a fiber preform impregnated with a resin comprising silsesquioxane. In another embodiment, the component includes a solid fiber inorganic-organic-polymer matrix composite comprising a fiber preform impregnated with a resin comprising polysilazane.

Other independent features and advantages of the preferred methods and materials will become apparent from the following detailed description, taken in conjunction with the accompanying drawings which illustrate, by way of example, the principles of the invention.

### BRIEF DESCRIPTION OF THE DRAWINGS

FIG. 1 is a cross section view of an exemplary gas turbine engine; and

FIG. 2 is a flow diagram of an exemplary method for making the fiber polymer matrix composite that may be incorporated into the gas turbine engine.

### DETAILED DESCRIPTION OF A PREFERRED EMBODIMENT

Before proceeding with the detailed description, it is to be appreciated that the following detailed description is merely exemplary in nature and is not intended to limit the invention or the application and uses of the invention. In this regard, it is to be additionally appreciated that the described embodiment is not limited to use in conjunction with any particular context. Hence, although the present embodiment is, depicted and described as being used to make, for example, mechanical or aircraft components, and more specifically, components of a multi-spool gas turbine jet engine, it will be appreciated that it can be implemented in various other types of systems and environments, including non-airborne systems, and in other engines. Furthermore, there is no intention to be bound by any theory presented in the preceding background or the following detailed description.

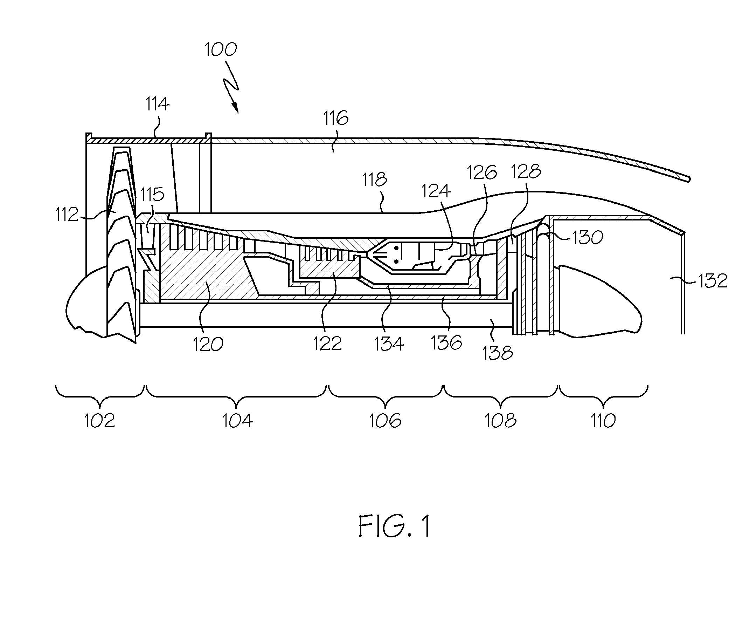

An exemplary embodiment of a multi-spool turbofan gas turbine jet engine 100 is depicted in FIG. 1, and includes an intake section 102, a compressor section 104, a combustion section 106, a turbine section 108, and an exhaust section 110. The intake section 102 includes a fan 112, which is mounted in a fan case 114, and stator vanes 115. The fan 112 draws air into the intake section 102 and accelerates it through the stator vanes 115. A fraction of the accelerated air exhausted from the fan 112 is directed through a bypass section 116 disposed between the fan case 114 and an engine cowl 118, and provides a forward thrust. The remaining fraction of air exhausted from the fan 112 is directed into the compressor section 104.

The compressor section 104 includes two compressors, an intermediate pressure compressor 120, and a high pressure compressor 122. The intermediate pressure compressor 120 raises the pressure of the air directed into it from the fan 112, and directs the compressed air into the high pressure compressor 122. The high pressure compressor 122 compresses the air still further, and directs a majority of the high pressure air into the combustion section 106. A fraction of the compressed air bypasses the combustion section 106 and is used to cool, among other components, turbine blades in the turbine section 108. In the combustion section 106, which includes an annular combustor 124, the high pressure air is mixed with fuel and combusted. The high-temperature combusted air is then directed into the turbine section 108.

The turbine section 108 includes three turbines disposed in axial flow series, a high pressure turbine 126, an intermediate pressure turbine 128, and a low pressure turbine 130. The high-temperature combusted air from the combustion section 106 expands through each turbine, causing it to rotate. The air is then exhausted through a propulsion nozzle 132 disposed in the exhaust section 110, providing addition forward thrust. As the turbines rotate, each drives equipment in the engine 100 via concentrically disposed shafts or spools. Specifically, the high pressure turbine 126 drives the high pressure compressor 122 via a high pressure spool 134, the intermediate pressure turbine 128 drives the intermediate pressure compressor 120 via an intermediate pressure spool 136, and the low pressure turbine 130 drives the fan 112 via a low pressure spool 138.

Some of the above-mentioned components, such as stator vanes 115, and aircraft components such as diffusers and ducts, are preferably made of a fiber polymer matrix composite (also referred to in the art as a polymer matrix composite) that is relatively light weight and formulated to be capable of operating in temperatures of at least 100°C. Additionally, the composite is also preferably capable of having improved resistance to oxidation, as compared to previous conventionally used polymer matrix composites (such as carbon-epoxy or carbon bismaleimide composites) when exposed to the aforementioned temperatures.

One suitable fiber polymer matrix composite having the aforementioned properties is an inorganic-organic material including a fiber preform impregnated with a silicon-containing resin. The fibers are preferably high modulus fibers and may be carbon fibers, or silicon carbide fibers, for example. In particular, the silicon-containing resin may be a resin that includes one or more silsesquioxanes or a resin that includes one or more polysilazanes. The silsesquioxane resin may be made of polymers that include polyhedral oligomeric silsesquioxanes such as polyvinylsilsesquioxanes. The polysilazane resin may be, for example, a polymer that includes cyclosilazanes, methyl hydrogen, and methyl vinyl groups.

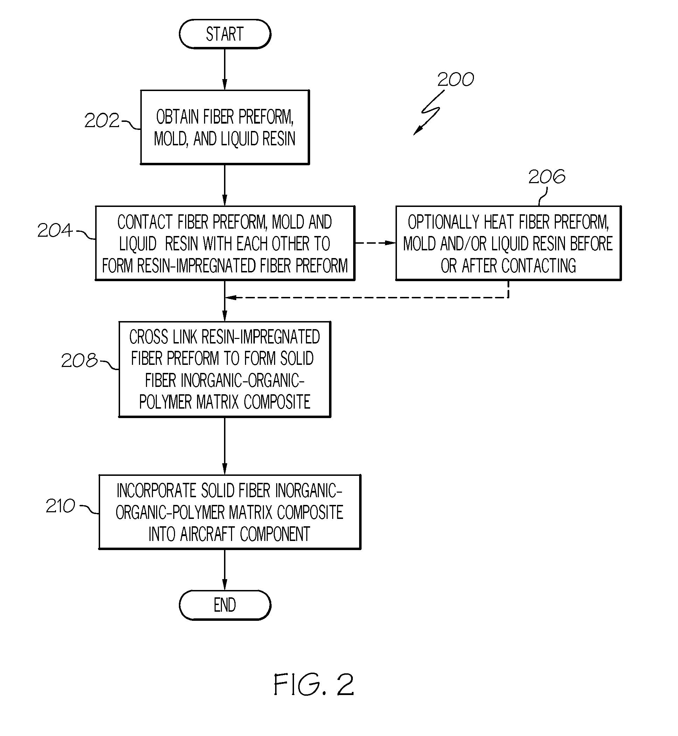

FIG. 2 is a flow diagram showing an exemplary method 200 of manufacturing a solid fiber inorganic-organic-polymer matrix composite component as mentioned above. First, a suitable fiber preform, a suitably shaped mold, and a silicon-containing resin are obtained, step 202. Next, one or more of the fiber preform, mold, and resin are placed in contact with one another to form a resin-impregnated fiber preform, step 204, and optionally heated, step 206. The resin within the resin-impregnated fiber preform is then subjected to a crosslinking process to form the solid fiber inorganic-organic-polymer matrix composite, step 208. The solid fiber inorganic-organic-polymer matrix composite is then incorporated into an aircraft component, step 210. Each of these steps will now be discussed in detail.

As briefly mentioned above, a suitable fiber preform, a suitably shaped mold, and a silicon-containing resin are first obtained, step 202. The fiber preform is made of fibers that are selected from one or more of the fiber types mentioned above and the fibers may be obtained as a fiber tow. One exemplary suitable high modulus fiber having 6000 fibers per tow is a carbon fiber sold under the trade name Toray MSSJ available through Toray Industries America, Inc. of New York, NY. Another exemplary fiber is a carbon fiber sold under the trade name Toray T300, available in tows containing, for example, 1000, 3000, or 6000 fibers/tow. The selected fibers may be disposed in a random or an organized pattern. In one exemplary embodiment, the fiber tows are woven into a fabric. In other embodiments, the fibers are commercially available as a pre-woven or a braided fabric. The fiber preform may be a single- or a multi-ply, woven or braided fabric and may be made into a layup of fabric plies. The fiber preform may also be composed of chopped, rather than continuous, fibers, and be, for example, in the form of a fibrous mat of any thickness.

The suitably shaped mold has an inner surface defining a cavity that is shaped substantially similarly to an outer surface of the component to be made, e.g. the stator vane 115, a rectangular plate, or any other desired shape. It will be appreciated that the mold may be made of any suitable material, such as a metal alloy. In one embodiment, the mold is made of aluminum.

The silicon-containing resin is preferably liquid at room temperature and is one that includes one or more of the components discussed above (e.g. a silsesquioxane or polysilazane resin). Specific examples of suitable resins include, but are not limited to polyhedral oligomeric silsesquioxanes or POSS® products available through Hybrid Plastics of Hattiesburg, MS, such as FireQuench® PM1287, and Ceraset® products available through KiON Corporation of Huntingdon Valley, PA, such as Polysilazanes 20.

In some embodiments, the fiber preform, mold, and resin, may need to be pre-processed before being used. For example, fiber preforms that include a polymer coating, known in the art as "sizing", may need to be chemically treated to remove the coating. The coating may be removed by contacting the fiber preform with suitable chemicals, while optionally sonicating the preform, or by other means, such as heating at a suitable temperature in a suitable atmosphere. For example, a fiber preform made of a carbon fabric, which is typically used with an epoxy-compatible resin, is first placed and sonicated in a liquid bath containing methylene chloride, then subjected to and sonicated in a liquid bath containing acetone. After de-"sizing", the fiber preform may optionally be coated with a different coating or sizing. In another example, the mold may be prepared to prevent adherence of materials to the mold inner surface. In one exemplary embodiment, a release compound is applied to the mold inner surface and allowed to partially evaporate and/or dry. Any one of numerous conventional release compounds may be used, such as, for example, liquid Frekote® 700, available through Henkel Corporation, USA. The release compound may also be in the form of a sheet of material. The liquid resin may be processed to promote its polymerization in later steps. In this regard, a catalyst may be added to the liquid resin. For example, in embodiments in which a silsesquioxane liquid resin is used, a platinum-based catalyst may be added. In embodiments in which a polysilazane liquid resin is used, a peroxide-based catalyst may be employed. Gases in the form of dissolved air or volatiles may be removed from the resin by heating the liquid resin and/or by exposing the liquid resin to a pressure below ambient pressure at ambient and/or higher temperatures.

After the fiber preform, mold, and resin are obtained, they are placed in contact with one another to form a resin-impregnated fiber preform, step 204, and optionally heated to a predetermined temperature, step 206. The fiber preform, mold, and resin may be contacted with each other in any one of numerous manners. In one embodiment, the liquid resin can be poured into the mold and the fiber preform may then be placed in the mold. In another alternative, if the fiber preform is composed of a layup of fabric plies, some of the resin can be poured into the mold, at least one fabric ply can be placed in the mold over the liquid resin, additional resin can be poured over the fabric ply, and so on. In another alternative, the fiber preform may be placed in the mold first, and then liquid resin may be poured onto and into the preform. In yet another alternative, layers of the fabric preform can be impregnated individually with liquid resin which is then solidified by cooling or partial reaction (e.g. via B-staging).

In one exemplary embodiment, the liquid resin may be infused into the fiber preform at atmospheric pressure. In another exemplary embodiment, the fibers are placed in the mold cavity, the mold is assembled and closed, and the mold assembly may also be externally pressurized to about 70 psi to affect a leak-tight closure. In some embodiments, the mold cavity is also evacuated prior to and/or during resin infiltration. In the latter case, the liquid resin may be aspirated into the mold cavity to thereby wet the fibers of the fiber preform. In yet other embodiment, pressure may also be applied to the resin-infiltrated preform inside the cavity to improve resin penetration and wetting of the fibrous surfaces.

As briefly mentioned above, the fiber preform, mold, and/or resin may optionally be heated, step 206. In one embodiment, the fiber preform, mold, and resin are heated separately before being placed in contact with each other. In other embodiments, the components are heated after being contacted with each other. In any case, if heated, the fiber preform, mold, and liquid resin may be heated to a predetermined temperature, which depends on the specifics of the materials, for example, a temperature that is between about 15°C and about 60°C. As will be appreciated by those with skill in the art, when the fibers or mold are heated, adsorbed gases, such as water vapor, are removed from surfaces of the fibers or mold; when the liquid resin is heated, dissolved gases or vapors may be removed from the liquid resin. Heating also reduces the viscosity of the liquid resin, which may be desirable to enhance penetration of the resin within interstices of the fiber preform and wetting of the fiber preform surfaces.

Next, the resin within the resin-impregnated fiber preform is cross linked to form the fiber polymer matrix composite, step 208. Cross-linking is achieved by heating the fiber polymer matrix composite to a predetermined temperature that is preferably below the resin pyrolysis temperature, said pyrolysis temperature depending on the particular silicon-containing resin being used. In one embodiment in which the silicon-containing resin contains silsesquioxanes, the predetermined temperature is, for example, 130°C. In another embodiment where the silicon-containing resin contains polysilazanes, the predetermined temperature is, for example 200°C.

This heating step not only cross-links the silsesquioxane or polysilazane containing liquid resin, but also causes the liquid resin to form the solid inorganic-organic matrix in the fiber polymer matrix composite. Impregnating the fiber preform and maintaining the predetermined temperature results ideally in a fully densified composite in a single infiltration step. This is in contrast to the so-called polymer infiltration and pyrolysis (PIP) method of fabricating ceramic (inorganic) matrix composites. In PIP methods, the resin-impregnated fiber preform is heated to temperatures equal to or higher than the pyrolysis temperature of the resin, which causes the resin to at least partially decompose. The decomposition results in a significant loss of resin mass so that the composite does not become fully densified unless exposed to multiple infiltration and pyrolysis cycles (e.g. typically greater than 5 cycles).

Another advantage of method 200 is that heating is kept below the pyrolysis temperature of the resin, so that the cured resin portion of the composite remains partially organic and retains a greater number of lighter weight elements (e.g. oxygen, carbon, nitrogen, hydrogen) than a corresponding pyrolized matrix. As a result, the solid fiber inorganic-organic-polymer matrix composite has a lower density (e.g. 1.1-1.4 g/cm³ for silsesquioxanes or polysilazanes impregnated carbon fabric) and a lower weight than a comparably sized pyrolized inorganic fiber-matrix composite. These characteristics make the solid fiber inorganic-organic-polymer matrix composite an advantageous material in systems in which weight is a design concern, such as, for example, in aircraft and spacecraft applications.

Heating may occur in a single step, multiple steps or in a continuum of temperatures within a temperature range below the pyrolysis temperature of the resin. In one example, the impregnated fiber preform is subjected to a three-step heating sequence where heating occurs at a first temperature, then a second higher temperature, and a third temperature that is higher than the first and the second temperatures, where none of the temperatures exceed 130°C. In one exemplary embodiment in which the liquid resin contains silsesquioxanes, the impregnated fiber preform is heated to a first temperature of about 60°C, then the temperature is increased to a second temperature of about 80°C and the impregnated fiber preform is maintained at the second temperature, and then the impregnated fiber preform is subsequently exposed to a third temperature of between about 120°C and about 130°C. The temperatures of each step may be maintained, for example, for between about 0.5 and about 2 hours.

In another exemplary embodiment, in which the liquid resin contains polysilazanes, the impregnated fiber preform is heated to a first temperature of about 55°C, then heated to a second temperature of about 100°C, then heated to a third temperature of 150°C, and subsequently exposed to a fourth temperature of between about 180°C and about 200°C. In this embodiment, each of the steps of heating may be performed and maintained, for example, for between about 30 minutes to about 60 minutes and the step of exposing may be performed and maintained for between about 3 and about 4 hours.

Although two heating sequences have been described above, it will be appreciated that any other suitable sequence may be alternatively employed having any number of heating steps where the temperatures do not exceed the pyrolysis temperature of the resin or a temperature at which the fiber may degrade.

In some embodiments, steps 204, 206, and 208 may be repeated; however, as mentioned above, repetition is not necessary for the formation of a suitable solid fiber inorganic-organic-polymer matrix composite.

The solid fiber inorganic-organic-polymer matrix composite is then incorporated into the engine component, step 210. In some cases, the solid fiber inorganic-organic-polymer matrix composite may be molded into the shape of the engine component during the heating step 208.

The following examples demonstrate various embodiments of the solid fiber inorganic-organic-polymer matrix composite and the methods of manufacturing the solid fiber inorganic-organic-polymer matrix composite. These examples should not be construed as in any way limiting the scope of the invention.

Example 1

T300 PAN-based carbon fiber fabric from Toray Industries America, Inc. of New York, NY was used to make nine plates of the solid fiber inorganic-organic-polymer matrix composite. Each composite plate included ten fabric plies, where the fabric was woven in a five-harness satin pattern and each tow comprised 6000 fibers. Four plates were fabricated using standard-sized fabric, while five plates were fabricated using solvent-desized fabric, where the fabric was desized by sequentially being subjected to a methylene chloride liquid bath and an acetone liquid bath, while being sonicated.

In each case, FireQuench® PM 1287 liquid resin containing silsesquioxanes and manufactured by Hybrid Plastics Inc. of Hattiesburg, MS, was placed in a glass bottle and heated to a temperature between 18°C and 60°C. About 0.18% to about 0.29% by weight of platinum-cyclovinylmethyl-siloxane complex in cyclic methylvinylsiloxanes (2.0%-2.5%) catalyst manufactured by Gelest Inc. of Morrisville, PA was added to the liquid resin and stirred.

An aluminum mold, having a top platen and a bottom platen forming a cavity shaped to resemble an approximately 5.1 x 7.6 cm rectangular flat plate therebetween, was coated on its internal surfaces with Frekote® 700 (available through Henkel Corporation, USA), which was allowed to dry/partially evaporate. A total of ten carbon fabric plies were placed in a 0/90° configuration in the mold cavity, and the open mold was placed in a hot press and heated to about 55°C. The liquid resin was then infused into the mold cavity to impregnate the fabric. The top and bottom platens of the mold were then assembled and the mold was closed. Excess liquid resin was allowed to flow out through an opening in the mold. The impregnated fabric was heated to 60°C and maintained at that temperature for about 2.5 hours. The temperature was then increased to 80°C for about 1.5 hours. Next, the temperature was increased to between about 120°C-125°C and the impregnated fabric was annealed for about 2.5 hours, forming solid carbon-polyhedral oligomeric silsesquioxane ("CPOS") composite plates having fibers disposed in a cured solid inorganic-organic resin matrix. The mold and composite were then cooled to room temperature.

The average thickness of each CPOS composite plate was between about 0.375 cm and about 0.378 cm. The geometrical densities of these plates were between about 1.35 - 1.41 g/cm³. After removing radially extending fringes from edges of the plates, the geometrical densities were found to be between about 1.29 - 1.38 g/cm³, where the geometrical volume was taken as the net plate volume. Densities of between about 1.3-1.4 g/cm³ are very desirable in terms of use in weight-sensitive applications, such as in airborne or space vehicles. The volumetric fractions of fiber, matrix, and voids in these plates were measured and calculated to be between about 41.1 - 46.5%, 47.6 - 53.4% and 4.7 - 7.8%, respectively.

Short-beam shear strength measurements per ASTM Standard # D2344 were performed at room temperature on seventy-five specimens machined from CPOS composite plates fabricated with both standard-sized and desized carbon fibers. The average short beam strength of the standard-sized specimens machined from central, higher density regions of each plate was 0.57 ± 0.06 ksi, and the corresponding value for desized plates was 0.73 ± 0.09 ksi, about 28% higher than that of the standard-sized plates. Values of short beam shear strengths for all 75 specimens were in the range of between about 0.3 ksi - 1 ksi. Development of sizing appropriate for this resin and/or use of other similar-type resins, either alone or in combination with conventional polymers, such as epoxy or bismaleimide, could result in composites with improved shear strengths. Visual and optical microscopic examinations of the plates, and also the smaller specimens machined for mechanical testing showed good resin penetration and coating of individual fibers.

In a separate run, a neat solid polyhedral oligomeric silsesquioxane ("POSS") plate was fabricated using similar procedures and conditions as described above in this example, but without applying pressure to the resin. The geometric density of the neat solid plate was determined to be about 1.19 g/cm³..

The hydrophobicities of both types of composite plates were determined by placing single, approximately 5 mm diameter drops of deionized water on various surfaces of the samples. All of these materials were found to be very hydrophobic, as the water drops beaded up and remained beaded up with a contact angle in the order of 90° or higher. Both the top and machined/sawed edge surfaces were found to be very hydrophobic.

Example 2

In another example, single-ply, braided carbon fiber fabric pieces were used as preforms for fabricating Carbon-polyhedral oligomeric silsesquioxane ("CPOS") composites. Toray M55J carbon fiber fabric from Toray Industries America, Inc. of New York, NY which is a high modulus fiber having 6,000 fibers per tow, was used. One group of carbon fabric pieces had a manufacturer-applied standard sizing (sized fabric), and another group of fabric pieces were de-sized using sequential sonication in methylene chloride and acetone, followed by drying on a hot plate in air (desized fabric). FireQuench® PM 1287 liquid resin containing silsesquioxanes and manufactured by Hybrid Plastics Inc. of Hattiesburg, MS was used. An aluminum mold was used, having an approximately 10.0 x 12.5 cm cavity which could accommodate an approximately 0.1 cm thick fiber preform. The cavity was surrounded by a groove for a silicone O-ring, and was also connected to machined inlet and outlet holes connected to fittings, to enable pumpdown of the mold and insertion of the resin. The outlet tube was connected to a vacuum manifold including tubulation, valves, filters and a rotary vacuum pump. The inlet was connected to a manifold including tubulation, valves, and a compound vacuum/pressure gauge. A flat opposing aluminum plate within the mold was used to enclose the cavity and when properly clamped and valved off, to create a leak-tight enclosure.

An exemplary infiltration procedure consisted of first applying vacuum grease to the O-ring, and a light coating of a release compound, such as Frekote® 700 (available through Henkel Corporation, USA), to the internal surfaces of the cavity and the opposing flat plate; this release compound was next allowed to dry/partially evaporate. The carbon fabric was then placed inside the cavity, the mold was closed, reassembled, and placed in a hot press. The mold enclosing the carbon fabric was then heated to approximately 60°C. The pressure was set to about 70 psig, and the mold was evacuated.

A quantity of the resin was placed in a beaker, which was covered and heated on a hot plate to approximately 60°C. The resin was periodically stirred while on the hot plate. About 0.1% of a platinum-based catalyst was added into the resin in the beaker and the mixture was stirred on the hot plate at approximately 60°C. The beaker containing the catalyzed resin was then brought to the inlet tubulation attached to the mold and the appropriate valves were actuated to effect aspiration of catalyzed resin into the evacuated mold enclosing the carbon fabric. Next, the temperature of the mold was increased to 80°C, the pressure within the press was adjusted if required to about 70 psig, and the mold and its contents were annealed for 2 hours at 80°C. Then, the temperature of the mold and its contents was increased to 130°C and the assembly was maintained at that temperature for 2 hours. The mold was then allowed to cool to room temperature.

After one infiltration cycle, the CPOS composite plate was rigid and its thickness was approximately 0.1 cm. The infiltration and curing of the resin increased the weight of the carbon fabric by about 40-50%. The cured resin was pale-yellow transparent or translucent in color and appearance. It was found that a second resin infiltration step resulted in a further but smaller 15-25% additional increase in weight of the CPOS composite plate. In the second infiltration, the catalyzed resin was infiltrated either in vacuum, following the procedure described above, or at atmospheric pressure. The atmospheric pressure infiltration consisted of pouring catalyzed resin into the cavity in the mold, then placing the CPOS composite plate in the mold and pressing the composite plate above the resin, and then adding more catalyzed resin to the top surface of the CPOS plate. The mold was then assembled and pressure was applied in the press. Heating was performed as during vacuum infiltration. Geometrical densities of CPOS composite plates were then measured and found to be in the range of 1.2-1.3 g/cm³. These densities are considered very attractive in terms of use in weight-sensitive applications, such as in airborne or space vehicles. Modifications to the mold and ancillary valving and tubulation, which are within the purview of a person skilled in the art, would enable final composite density to be reached in one infiltration cycle.

To determine the tensile properties of as-cured CPOS composites, rectangular samples measuring approximately 1.3 cm in width by 10.0-12.0 cm in length were cut from the larger plates. Aluminum tabs about 1.3 x (1.5-2.5) cm were glued on both sides and at each end of each sample. The tensile strengths of several sets of such CPOS samples were then measured at room temperature. It was found that tensile strengths were in the range 10-45 ksi and that the values generally increased with increasing geometrical density. The sample with the highest tensile strength, 45 ksi, had a geometrical density of 1.24 g/cm³. These tensile strengths are considered very good.

Example 3

T300 PAN-based carbon fiber fabrics available through Toray Industries America, Inc. of New York., NY were used to make two plates of the solid fiber inorganic-organic-polymer matrix composite. Each composite plate included ten fabric plies, where the fabric was woven in a five-harness satin pattern and each tow comprised 6000 fibers. One plate was fabricated using standard-sized fabric, while a second plate was fabricated using solvent-desized fabric, where the fabric was desized by being sequentially subjected to a methylene chloride liquid bath followed by an acetone liquid bath, while being sonicated.

Ceraset® Polysilazanes 20 liquid resin containing polysilazanes and manufactured by KiON Corporation of Huntingdon Valley, PA, was placed in a glass bottle under a nitrogen atmosphere and heated to about 55°C. About 0.9% by weight of dicumyl peroxide 98% was added as an initiator or catalyst to the liquid resin and the mixture was stirred.

An aluminum mold, having a top platen and a bottom platen forming a cavity shaped to resemble a 5.1 x 7.6 cm rectangular flat plate therebetween, was coated on the internal surfaces with Frekote® 700 (available through Henkel Corporation, USA), which was allowed to dry/partially evaporate. A total of ten carbon fabric plies were placed in a 0/90° configuration in the mold cavity, and the open mold was placed in a hot press and heated to about 55°C. The liquid resin was then poured into the mold cavity to impregnate the fabric. The top and bottom platens of the mold were then assembled and the mold was closed. Excess liquid resin was allowed to flow out through an opening in the mold. The impregnated fabric was heated to and maintained at 55°C for about 36 minutes. The temperature was then increased to and maintained at 100°C for about 40 minutes. Next, the temperature was increased to and maintained at about 150°C for 31 minutes, then finally the temperature was increased to 200°C and maintained at that value for three hours and 35 minutes to produce solid inorganic-organic composite plates having fibers disposed in a cured solid resin matrix. The liquid resin solidified between 100°C and 150°C. The plates were then cooled to room temperature.

The average thickness of each plate was about (a) 0.373 cm and (b) 0.368 cm, respectively. The geometrical density of each of the plates was (a) 1.32 g/cm³ and (b) 1.31 g/cm³. After radially extending fringes were removed from the edges of each plate, the density measurements were about (a) 1.29 and (b) 1.28 g/cm³, respectively, where the geometrical volume was taken as the net plate volume. The volumetric fractions of fiber, matrix, and voids of each of the plates were measured and calculated to be (a) 48.7%, 39.0%, and 12.3% and (b) 43.1 %, 45.0%, and 11.9%, respectively. The average short beam strength of specimens machined from the central, higher density region of the composite plate fabricated with sized fiber was about 1.554 ± 0.024 ksi.

Visual and optical microscopic examinations of the plates, and also smaller samples machined for mechanical testing showed good resin penetration and coating of individual fibers. There was no indication of Ceraset® matrix delaminating from external surfaces of the plates. Some voids were visible consistent with the calculated void fractions. The as-molded plates and specimens for short beam strength measurements, which were machined to 2.3 x 0.76 cm, were exactly rectangular with no loose or out of plane fibers or fiber tows.

In a separate run, a neat solid resin plate was fabricated using similar procedures and conditions as described above in this example, without applying pressure to the resin. The geometric density of the neat solid Ceraset® plate was determined to be 1.12 g/cm³.

The hydrophobicities of all of the above plates were determined by placing single, approximately 5 mm diameter drops of deionized water on various surfaces of the samples. All of the plate materials were found to be very hydrophobic, as the water drops beaded up and remained beaded up with a contact angle in the order of 90° or higher. Both the top surfaces and machined/sawed edge surfaces of C-Ceraset samples were found to be very hydrophobic.

Solid fiber inorganic-organic-polymer matrix composites are now provided that are more thermally-resistant and oxidation-resistant as compared to conventional polymer matrix composites such as carbon-epoxy composites. The fiber inorganic-organic-polymer matrix composites are lightweight relative to conventionally used fiber inorganic-matrix composites, such as composites incorporating carbon or ceramic matrices, and thus, are useful for manufacturing aircraft and/or spacecraft components. Additionally, the process for making the composite is relatively inexpensive and simple to perform.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method of manufacturing a solid fiber inorganic-organic-polymer matrix composite, the method comprising the steps of:
impregnating a fiber preform with a liquid resin, the liquid resin having a pyrolysis temperature and comprising at least one compound selected from the group consisting of silsesquioxane and polysilazane; and
curing the resin-impregnated fiber preform at a temperature below the pyrolysis temperature of the resin to form the solid fiber inorganic-organic-polymer matrix composite.

2. The method of claim 1, wherein:
the step of impregnating comprises impregnating the fiber preform with a silsesquioxane liquid resin; and
the step of curing comprises:
heating the silsesquioxane resin-impregnated fiber preform to a first temperature of about 60°C;
increasing the first temperature to a second temperature of about 80°C and subjecting the silsesquioxane resin-impregnated fiber preform to the second temperature; and
exposing the silsesquioxane resin-impregnated fiber preform to a third temperature of between about 120°C and about 130°C.

3. The method of claim 2, further comprising performing the steps of heating, increasing, and exposing for between about 1.5 and about 2 hours.

4. The method of claim 2, wherein the step of impregnating further comprises:
adding a platinum-based catalyst to the silsesquioxane liquid resin.

5. The method of claim 2, wherein the step of impregnating comprises impregnating the fiber preform with a polyhedral oligomeric silsesquioxane resin.

6. The composite of claim 5, wherein the step of impregnating comprises impregnating the fiber preform with a polyvinylsilsesquioxane resin.

7. The method of claim 1, wherein:
the step of impregnating comprises impregnating the fiber preform with a polysilazane liquid resin; and
the step of curing comprises:
heating the polysilazane resin-impregnated fiber preform to a first temperature of about 55°C;
heating the polysilazane resin-impregnated fiber preform to a second temperature of about 100°C;
heating the polysilazane resin-impregnated fiber preform to a third temperature of about 150°C; and
exposing the heated polysilazane resin-impregnated fiber preform to a fourth temperature of between about 180°C and about 200°C.

8. The method of claim 1, wherein the step of impregnating comprises:
positioning the fiber preform in a cavity of a mold;
closing the mold;
applying a pressure of about 70 psig to the mold;
evacuating the mold cavity;
heating the mold and the fiber preform to a temperature between about 15°C and about 60°C; and
aspirating the liquid resin into the evacuated mold cavity.

9. The method of claim 1, further comprising:
coating an inner surface of a mold with a volatile release compound, the inner surface defining a cavity; and
positioning the fiber preform in the coated mold cavity.

10. The method of claim 1, further comprising:
infiltrating the cured resin-impregnated carbon fiber preform with additional liquid resin; and
repeating the step of curing.
